# EUROPEAN PATENT SPECIFICATION

(11) **EP 1 595 019 B1**
(45) Date of publication and mention of the grant of the patent: **20.07.2011**
(21) Application number: 04711770.0
(22) Date of filing: 17.02.2004
(51) Int. Cl.: D06F 37/22

(54) **DRUM TYPE WASHING MACHINE**
TROMMELWASCHMASCHINE
MACHINE A LAVER A TAMBOUR

(30) Priority: 17.02.2003 KR 2003009804
(43) Date of publication of application: 16.11.2005
(73) Proprietor: LG Electronics, Inc., Seoul 150-721 (KR)
(72) Inventor: LEE, Deug Hee, Kimhae-si, Gyeongsangnam-do 621-833 (KR); LEE, Tae Hee, Youngdungpo-gu, Seoul 150-070 (KR)
(74) Representative: Hale, Peter
(86) International application number: PCT/KR2004/000313
(87) International publication number: WO 2004/072350

(56) References cited:
- GB-A- 2 070 074
- US-A- 3 389 881

## Description

### Technical Field

The present invention relates to washing machines, and more particularly, to a drum type washing machine, in which a device, which attenuates vibration transmissive to a tub when a drum rotates and washes laundry, is improved.

### Background Art

The washing machine progresses washing, rinsing, and spinning processes for removing contaminants stuck to laundry by using actions of detergent and water. There are pulsator type washing machines in which a washing tub is stands vertical, and drum type washing machines in which a rotating drum is mounted in a horizontal direction.

The pulsator type washing machine washes by using a friction force between a water circulation taken place when the pulsator mounted on a bottom of the washing tub rotates and the laundry. Even though the pulsator type washing machine is advantageous in that a washing time period is short, a washing machine that can handle a large capacity can be fabricated, and price is low, but is disadvantageous in that laundry is liable to entangle, and damage to the laundry is relatively high.

On the other hand, the drum type washing machine washes by using impact and friction taken place at the time the laundry lifted by tumbling ribs on an inside surface of the drum drops down when the drum rotates. Since the drum type washing machine is advantageous in that there is almost no damage to the laundry, and entangle of laundry, and a small amount of water is used, the supply of the drum type washing machine increases sharply, recently.

United States patent 3,389,881 discloses a suspension system for rotatable drums of the type utilized in top loading domestic washing/drying apparatus. A rotatable drum is suspended in a rigid framework by a plurality of evenly arranged spring and damping elements.

UK patent 1414294 discloses a washing machine in which inner and outer drums are supported within a casing by three inwardly inclined suspension legs. The three suspension legs are similar in construction and each incorporates a helical compression spring enclosed in a metal cylinder.

United States patent 3,703,091 discloses a centrifugal extraction machine. An assembly is supported by an outer casing entirely from below by a number of legs each incorporating a spring. A pair of stabilizing springs are provided, which extend from a bracket secured to the top of the assembly centrally along its fore and aft length. The springs extend one forwards and one rearwards to suitable end connections on an outer casing.

French patent 1.353.957 discloses a washing machine with a tank, which receives a drum and rests on elements with springs, which are supported against a bed plate or the base of the machine. The tank can be suspended using three elastic feet on the bed plate, with two elastic feet on one side and one on the opposed side.

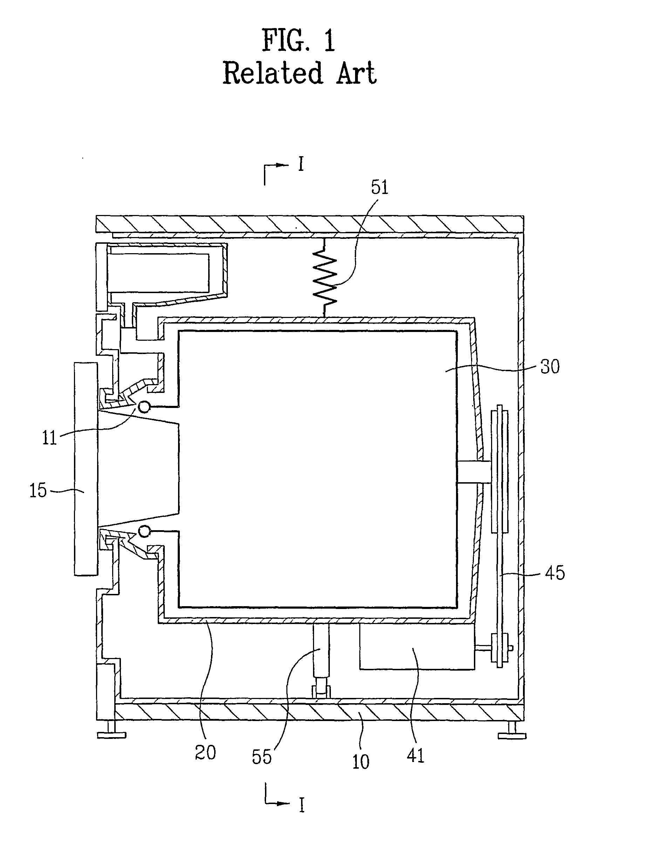

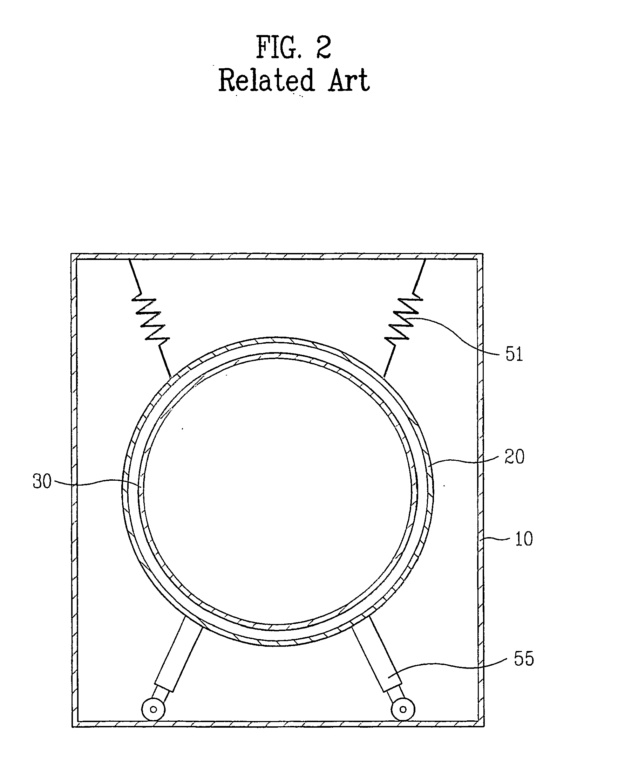

FIG. 1 and 2 illustrates related art drum type washing machines, referring to which the drum type washing machine will be described in more detail.

Referring to FIG 1, there is an introduction opening 11 in a front surface of a cabinet 10 that forms an outer appearance of the drum type washing machine, with a door 15 on the opening 11 for opening/closing the opening 11. There is a tub inside of the cabinet provided in a floated state. For this, as shown in FIG. 2, one pair of springs 51 are connected between opposite side parts of an upper surface of the tub 20 and the cabinet 10, and one pair of damper 55 are connected between opposite side parts of a lower surface of the tub 20 and the cabinet 10.

There is a drum 30 rotatably mounted inside of the tub 20 having a plurality of tumbling ribs (not shown) projected from an inside surface. For this, a belt 45 is connected between a motor 41 below the tub 20 and the drum 30. However, a structure of the drum type washing machine is not limited to this, but the motor may be directly connected to the drum 30 without the belt 45.

In the drum type washing machine, when laundry is introduced into the drum 30, and the drum 30 is rotated, the laundry is lifted up by the tumbling ribs, and drops down. The impact and the friction taken place in the time washes the laundry.

However, when the drum 30 rotates for washing or waster extraction, the tub 20 has much vibration transmitted thereto. Particularly, during spinning when the drum 30 spins at a high speed, the vibration transmitted to the tub 20 becomes greater if the laundry leans to one side of the drum 30.

Meanwhile, the vibration taken place thus is attenuated with the one pair of springs 51 and the dampers 55 that support the tub 20. However, because the one pair of the springs 51 and dampers 55 are connected to the tub 20 at a middle of a longitudinal direction of the tub 20 substantially, it is difficult that the one pair of the springs 51 and dampers 55 attenuate all the front/rear direction vibration, up/down direction vibration, and left/right direction vibration, of the tub 20, smoothly.

Consequently, there can not, but be a comparative heavy vibration at the related art drum type washing machine, to cause a problem of generation of a loud noise.

### Disclosure of Invention

An object of the present invention devised to solve the problem lies on attenuating various directions of vibrations transmissive to a tub when the washing machine is in operation, smoothly.

The object of the present invention can be achieved by providing a drum type washing machine of the type recited in claim 1.

At least one of the first to third dampers is connected to a lower surface of the tub.

The first, and second dampers are arranged adjacent to a front part, and a rear part in a longitudinal direction of the tub respectively, and the third damper is arranged at middle in a longitudinal direction of the tub, or at a position opposite to middle of the first and second dampers.

The first, and second dampers are positioned on a side the drum rotates from an upper side to a lower side when the tub is seen from the front, and the third damper is positioned on a side the drum rotates from a lower side to an upper side when the tub is seen from the front.

The first or second damper has a half of a damping capability of the third damper, substantially.

The at least one spring may include a first spring connected to an upper surface of the tub on a side the same with the first, and second dampers, and second, and third springs connected to the upper surface of the tub on a side the same with the third damper.

The first spring may be positioned at middle in a longitudinal direction of the tub, the second, and third springs are arranged adjacent to a front part, and a rear part in the longitudinal direction of the tub respectively. Of course, the first spring may be arranged at a point opposite to middle of the second, and third springs.

The first spring may be positioned on a side the drum rotates from an upper side to a lower side when the tub is seen from the front, and the second, and third springs may be positioned on a side the drum rotates from a lower side to an upper side when the tub is seen from the front.

The second, or third spring may have a half of damping capability of the first spring.

Thus, the present invention can attenuate not only left/right, and up/down vibrations, but also front/rear vibration transmissive to the tub during rotation of the drum by using a small number of dampers and springs, effectively.

### Brief Description of Drawings

The accompanying drawings, which are included to provide a further understanding of the invention, illustrate embodiments of the invention and together with the description serve to explain the principle of the invention.

In the drawings;
FIG.1 illustrates a section of a related art drum type washing machine;
FIG.2 illustrates a section across a line I-I in FIG.1;
FIG.3 illustrates a section of a washing machine in accordance with a preferred embodiment of the present invention;
FIG.4 illustrates a perspective view showing dampers and springs connected to a tub in the washing machine in FIG 3; and
FIGS. 5A ∼ 5E illustrate graphs showing comparison of vibration amplitudes measured at different parts of tubs of the related art and the present invention, respectively; wherein

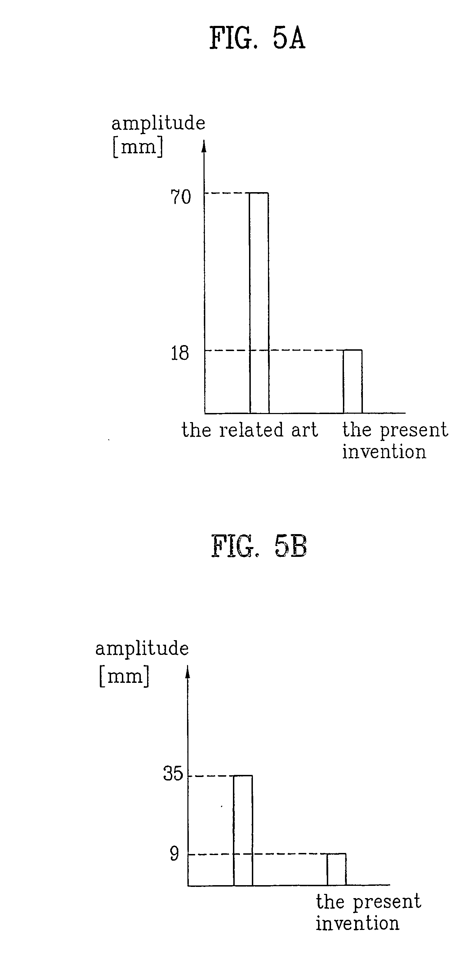

FIG. 5A illustrates a graph showing comparison of front/rear direction vibration amplitudes at a lower part of the tub,
FIG. 5B illustrates a graph showing comparison of up/down direction vibration amplitudes at a front part of the tub,

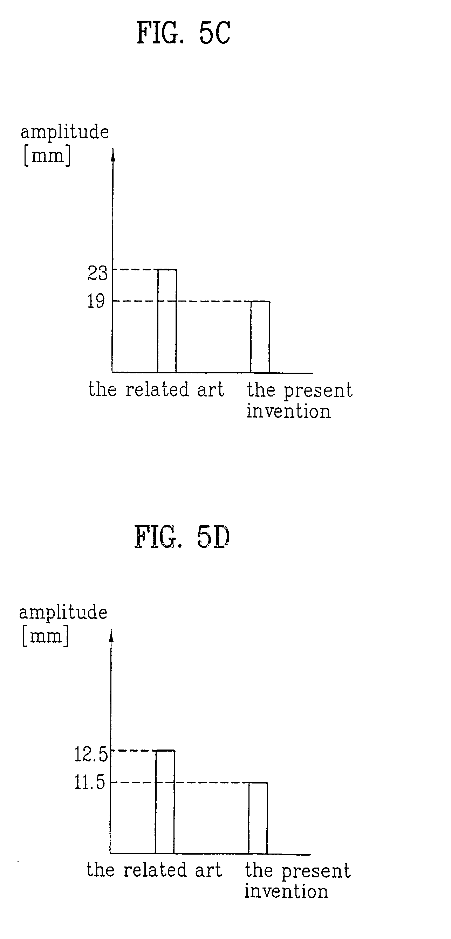

FIG 5C illustrates a graph showing comparison of left/right direction vibration amplitudes at a front part of the tub,
FIG. 5D illustrates a graph showing comparison of vibration amplitudes at a front part of the tub caused by yawing, and

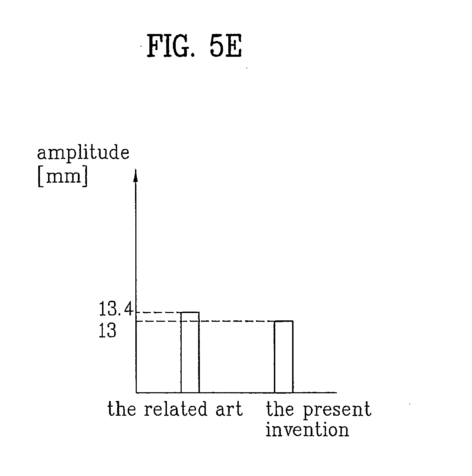

FIG. 5E illustrates a graph showing comparison of vibration amplitudes at a rear part of the tub caused by yawing.

### Best Mode for Carrying Out the Invention

Reference will now be made in detail to the preferred embodiments of the present invention, examples of which are illustrated in the accompanying drawings.

In describing the embodiments, same parts will be given the same names and reference symbols, and additional, and repetitive description of which will be omitted.

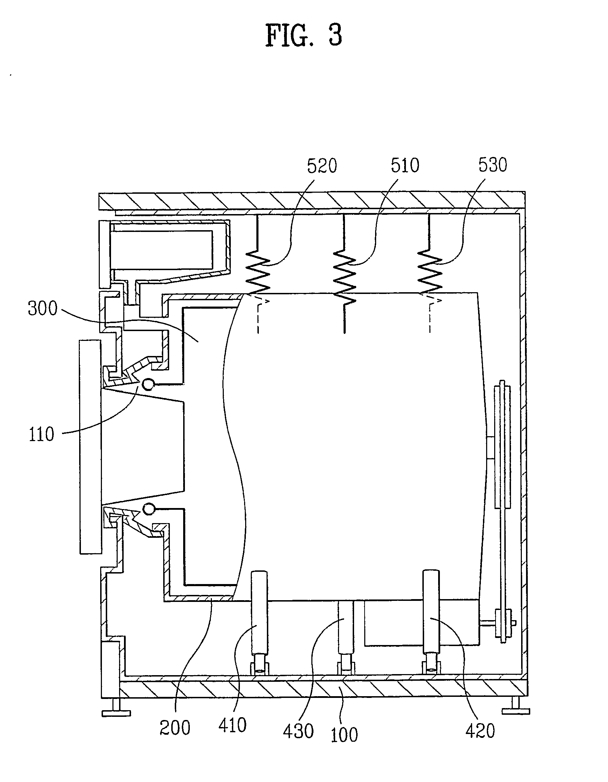

Referring to FIG 3, there are a tub 200 inside of a cabinet 100 having an opening 110 in a front surface, and a drum 300 rotatably mounted on an inside of the tub 200.

Since this structure is similar to the related art drum type washing machine described with reference to FIG. 1, the description will be omitted, and only springs and dampers which elastically support the tub 200 inside of the cabinet 100 will be described in detail.

The tub 200 of the present invention is supported with three dampers 410, 420, and 430. Each of the three dampers 410, 420, and 430 has one end connected to a circumferential surface of the tub 200, and the other end connected to the cabinet 100.

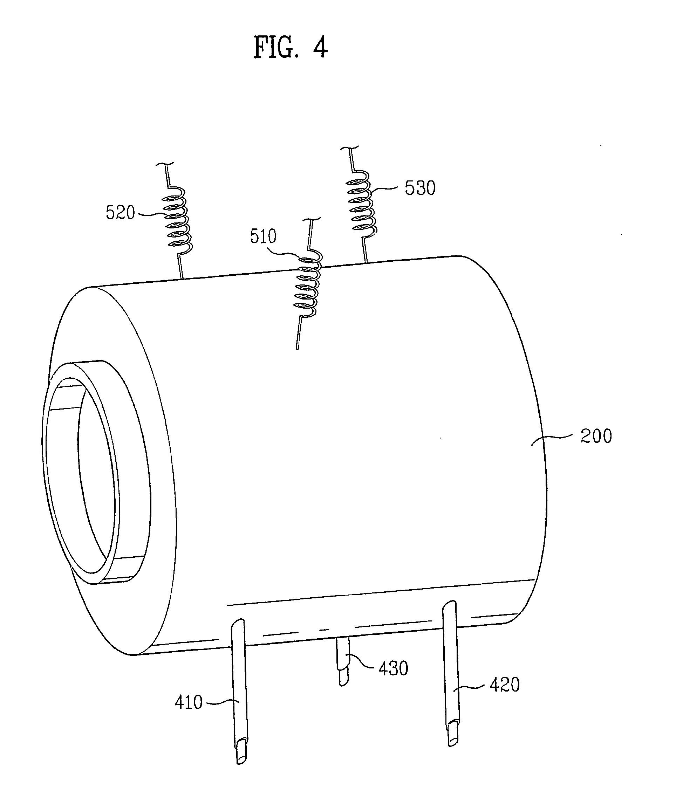

Of the dampers 410, 420, and 430, two dampers are connected to one side of the circumferential surface of the tub 200. For reference, FIGS. 3 and 4 illustrate an example in which, when the tub 200 is seen from the front, the first damper 410, and the second damper 420 are connected to one side with respect to a vertical plane passing through an axis of the tub 200.

Of the dampers 410, 420, and 430, the other damper is connected to the other side of the circumferential surface of the tub 200. For reference, FIGS. 3 and 4 illustrate an example in which, when the tub 200 is seen from the front, the third damper 430 is connected to the other side with respect to the vertical plane passing through the axis of the tub 200.

In this instance, as shown in FIG. 4, at least one, or more than one, preferably all of the first, to third dampers 410, 420, and 430 are connected to a lower surface of the tub 200.

Meanwhile, one of the two dampers connected to the same side of the circumferential surface of the tub 200 is arranged adjacent to a front part of the tub 200 with reference to a longitudinal middle point of the tub 200, and the other one adjacent to a rear part of the tub 200. For reference, FIGS. 3 and 4 illustrate an example in which the first damper 410 is arranged adjacent to the front part of the tub 200, and the second damper 420 is arranged adjacent to the rear part of the tub 200.

Opposite to this, the other damper, for an example, the third damper 430 is arranged at the middle part in the longitudinal direction of the tub 200, or at a point opposite to a middle point of the first damper 410 and the second damper 420.

In the meantime, in arranging the three dampers 410, 420, and 430, it is good practice even to take a rotation direction of the drum 300 into account. Because, there is a force for rotating the tub 200 in a direction the drum 300 rotates.

Taking this into account, it is preferable that the two dampers, i.e., the first damper 410 and the second damper 420 are arranged on a side the drum 300 rotates from an upper side to a lower side when the tub 200 is seen from the front. Opposite to this, it is preferable that the other one damper, i.e., the third damper 430 is arranged on a side the drum 300 rotates from a lower side to an upper side when the tub 200 is seen from the front.

It is preferable that a damping capability of the two dampers, i.e., the first damper 410, and the second damper 420 is substantially a half of the damping capability of the other damper, i.e., the third damper 430. Such a system balances sums of damping capabilities that support left and right sides of the tub 200. Moreover, the low damping capabilities of the first damper 410 and the second damper 420 can attenuate even a light vibration.

In the meantime, a greater number of dampers than the three dampers 410, 420, and 430 may be provided, for attenuating the vibration of the tub 200 taken place when the drum 300 rotates.

However, in this case, an obtainable vibration damping effect is low compared to the number of dampers provided thereto. That is, a vibration damping effect that can adequately offset a cost for additional dampers is not obtainable.

Moreover, the excessive damping capability from the many number of dampers makes unable to attenuate light vibrations transmissive to the tub 200, such that the washing machine fails in carrying out smooth washing.

Thus, if the washing machine is fabricated, taking the number of dampers, positions of mounting of the dampers, and the damping capabilities of respective dampers the present invention suggests into account, a maximum damping effect is obtainable while a minimum number of dampers are used.

In the meantime, besides the dampers 410, 420, and 430 connected thus, the washing machine of the present invention is further provided with at least one spring connected between a circumferential surface of the tub 200 and the cabinet 100 for attenuating the vibration of the tub 200, which will be described in more detail.

In the washing machine of the present invention, alike the dampers 410, 420, and 430, it is preferable that three springs are provided thereto.

Any one of the three springs 510, 520, and 530, for an example, a first spring 510 is connected to a side of the circumferential surface of the tub 200 the same with the side of the first damper 410 and the second damper 420.

The other two of the three springs 510, 520, and 530, for an example, the second spring 520, and the third spring 530 are connected to a side of the circumferential surface of the tub 200 the same with the side of the third damper 430.

Referring to FIG. 3, it is preferable that at least one, preferably all of the first to third springs 510, 520, and 530 are connected to an upper surface of the circumferential surface of the tub 200.

Meanwhile, the first spring 510 is arranged at a middle of a longitudinal direction of the tub 200, and one of the second and third springs 520, and 530 is arranged adjacent to a front with reference to the middle point of the longitudinal direction of the tub 200, and the other one is arranged adjacent to a rear with reference to the middle point of the longitudinal direction of the tub 200.

For reference, FIGS. 3 and 4 illustrate an example in which the second spring 520 is arranged in a front part of a longitudinal direction of the tub 200, and the third spring 530 is arranged in a rear part of the longitudinal direction of the tub 200. In the meantime, the first spring 510 may be connected to a point opposite to a middle point of the second, and third springs 520, and 530.

Also, in arranging the three springs 510, 520, and 530, it is good practice to take the rotation direction of the drum 300 into account. Therefore, if the rotation direction of the drum 300 is taken into account, it is preferable that the first spring 510 is positioned on a side the drum rotates from an upper side to a lower side when the tub 200 is seen from the front, and the second, and third springs 520, and 530 are positioned on a side the drum rotates from a lower side to an upper side when the tub 200 is seen from the front.

Moreover, it is preferable that damping capabilities of the second, and third springs 520, and 530 are a half of the damping capability of the first spring 510. This system balances sums of the damping forces that support left/right sides of the tub 200, and able to attenuate low vibration with the second and third spring 520, and 530 which have low damping forces.

A process of damping the vibration acting on the tub 200 when the washing machine of the present invention is in operation will be described.

In this instance, the first damper 410 and the second damper 420 uniformly attenuate vibration acting on the tub 200 in the rotation direction of the drum 300, vibration acting on the tub 200 in the left/right directions of the drum 300, and vibration acting on the tub 200 in the front/rear directions of the drum 300 at positions in a front part, and a rear part of the tub 200, respectively. Of course, the vibration acting in up/down directions is also attenuated by the first damper 410 and the second damper 420.

Moreover, because the first damper 410, or the second damper 420 has a damping force substantially a half of the third damper 430, even low vibration acting on the tub 200 is attenuated by the first damper 410 and the second damper 420. According to this, transmission of vibration to other parts caused by an excessive damping force can be prevented, enabling smooth attenuation of the vibration acting on the tub 200.

The third damper 430 attenuates the vibration acting on the tub 200 along a direction of rotation of the drum 300, and the vibration acting in up/down directions of the tub 200.

On the other hand, the first to third springs 510, 520, and 530 also attenuate the vibration of the tub 200, together with the first to third dampers 410, 420, and 430.

In this instance, the first spring 510 attenuates the up/down vibration of the tub 200, the vibration acting on the tub 200 along the rotation direction of the drum 300, and the left/right vibration.

The second spring 520 and the third spring 530 attenuate the vibration acting in up/down, and left/right directions of the tub 200, the vibration acting on the tub 200 in the rotation direction of the drum 300, and the vibration acting front/rear direction of the tub 200.

In the meantime, because the second spring 520, or the third spring 530 also has a damping capability substantially a half of the damping capability of the first spring 510, even low vibration transmissive to the tub 200 can be attenuated, thereby providing a great vibration attenuating effect.

In the washing machine of the present invention, the vibrations acting in up/down directions, left/right directions, and front/rear directions of the tub 200 are attenuated significantly in comparison to the related art that uses two dampers and springs. This can be confirmed with results of experiments illustrated in FIGS. 5A to 5E easily, which will be described.

FIG 5A illustrates a graph showing comparison of vibration amplitudes at a lower part of the tub caused by translation of the tub. As shown, it can be noted that, while the related art drum type washing machine has a 70mm vibration amplitude of the tub in front/rear directions, the drum type washing machine of the present invention has an 18mm vibration amplitude of the tub in front/rear directions. Thus, the present invention reduces the vibration amplitude in a range of approx. 50mm at the lower part of the tub caused by front/rear direction translation of the tub.

FIG. 5B illustrates a graph showing comparison of up/down direction vibration amplitudes at a front part of the tub. For reference, the tub vibrates in up/down directions due to pitching and up/down direction translation. As shown in FIG. 5B, it can be noted that, while the up/down direction amplitude of the tub of the related art drum type washing machine is in a range of approx. 35mm at the front part of the tub, the up/down direction amplitude of the tub of the present invention drum type washing machine is in a range of approx. 9mm at the front part of the tub. Thus, the present invention reduces the up/down direction vibration amplitude in a range of approx. 24mm at the front part of the tub 200.

FIG. 5C illustrates a graph showing comparison of left/right direction vibration amplitudes at a front part of the tub. For reference, the tub vibrates in left/right directions due to yawing and left/right direction translation. As shown in FIG. 5C, it can be noted that, while the left/right direction amplitude of the tub of the related art drum type washing machine is in a range of approx. 23mm at the front part of the tub, the left/right direction amplitude of the tub of the present invention drum type washing machine is in a range of approx. 19mm at the front part of the tub. Thus, the present invention reduces the left/right direction vibration amplitude in a range of approx. 4mm at the front part of the tub.

Next, FIGS. 5D and 5E illustrate graphs comparing vibration amplitudes at a front part, and a rear part of the tub caused by yawing, respectively. For reference, since vibration amplitudes caused by left/right direction translation of the tub is excluded, smaller values are measured than the values measured in experiments of FIGS. 5A to 5C.

Referring to FIG. 5D, it can be noted that, while the yawing amplitude of the tub of the related art drum type washing machine is in a range of approx. 12.5mm at the front part of the tub, the yawing amplitude of the tub 200 of the present invention drum type washing machine is in a range of approx. 11.5mum at the front part of the tub. Thus, the present invention reduces the yawing vibration amplitude in a range of approx. 1mm at the front part of the tub.

Referring to FIG. 5E, it can be noted that, while the yawing amplitude of the tub of the related art drum type washing machine is in a range of approx. 13.4mm at the rear part of the tub, the yawing amplitude of the tub of the present invention drum type washing machine is in a range of approx. 13mm at the rear part of the tub. Thus, the present invention reduces the yawing vibration amplitude in a range of approx. 0.4mm at the rear part of the tub.

Thus, the present invention attenuates the front/rear direction vibration of the tub 200 and the up/down direction vibration, significantly. Though smaller than the front/rear direction, and the up/down direction vibration reduction, the left/right direction vibration of the tub 200 is also reduced. Therefore, the present invention reduces the vibration of the tub very smoothly, to reduce noise, significantly.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

### Industrial Applicability

The present invention provides a number, and fitting positions of dampers, and a number, and fitting positions of springs that can give the highest vibration reduction efficiency with the lowest cost in reduction of vibration acting on the tub during operation of the washing machine.

Therefore, the present invention permit effective reduction of various vibration acting on a tub in various directions during operation of the washing machine. Therefore, the washing, ringing, and spinning can be carried out in a state the washing machine is stable. Moreover, noise caused by the vibration can be reduced, significantly.

## Claims

1. A drum type washing machine comprising:
a cabinet (100) having an opening (110) in a front surface;
a tub (200) inside of the cabinet (100) having a drum (300) rotatably mounted on an inside thereof;
first (410) and second (420) dampers connected between one side of a lower circumferential surface of the tub (200) and the cabinet (100), respectively;
a single third damper (430) connected between the other side of the lower circumferential surface of the tub (200) and the cabinet (100); and
at least one spring (510, 520, 530) connected between the circumferential surface of the tub (200) and the cabinet (100),
wherein the first (410) and second (420) dampers are arranged adjacent a front part, and a rear part in a longitudinal direction of the tub (200), respectively, and the third damper (430) is arranged at the mid-point between the first (410) and second (420) dampers on the other side of the lower circumferential surface of the tub (200),
wherein the first (410) and second (420) dampers are positioned on a side of the tub (200) at which the drum (300) rotates downwardly, and the third damper (430) is positioned on a side of the tub (200) at which the drum (300) rotates upwardly,
wherein the first (410) or second (420) damper has substantially half the damping capability of the third damper (430), and **characterised in that**
the at least one spring (510, 520, 530) includes:
a first spring (510) connected to an upper surface of the tub (200) on the same side as the first (410) and second (420) dampers, and
second (520) and third (530) springs connected to the upper surface of the tub (200) on the same side as the third damper (430).

2. The drum type washing machine as claimed in claim 1, wherein the third damper (430) is arranged at the mid-point in a longitudinal direction of the tub (200).

3. The drum type washing machine as claimed in claim 1, wherein the first spring (510) is positioned at the mid-point in a longitudinal direction of the tub (200).

4. The drum type washing machine as claimed in claim 1, 2 or 3, wherein the second (520) and third (530) springs are arranged adjacent a front part, and a rear part in the longitudinal direction of the tub (200), respectively.

5. The drum type washing machine as claimed in claim 1, 2 or 3, wherein the first spring (510) is arranged at the mid-point between the second (520) and third (530) springs on the other side of the upper surface of the tub (200).

6. The drum type washing machine as claimed in claim 1 or 2, wherein the first spring (510) is positioned on a side of the tub (200) at which the drum (300) rotates downwardly.

7. The drum type washing machine as claimed in claim 1, 2 or 6, wherein the second (520), and third (530) springs are positioned on a side of the tub (200) at which the drum (300) rotates upwardly.

8. The drum type washing machine as claimed in claim 1, 2 or 6, wherein the second (520) or third (530) spring has half the damping capability of the first spring (510).

9. The drum type washing machine in claim 1 wherein the first (410), and second (420) dampers are connected between one side of a circumferential surface of the tub (200) and the cabinet (100) respectively, for attenuating up/down, left/right, and front/rear vibrations of the tub (200);
the third damper (430) is connected between the other side of the circumferential surface of the tub (200) and the cabinet (100), for attenuating up/down, and left/right vibrations of the tub (200); and the at least one spring (510, 520, 530) includes:
a first spring (510) connected between the same side of a circumferential surface of the tub (200) as the first (410) and second (420) dampers, and the cabinet (100), for attenuating up/down, and left/right vibrations of the tub (200); and
second (520), and third (530) springs connected between the same side of a circumferential surface of the tub (200) as the third damper (430), and the cabinet (100) respectively, for attenuating up/down, left/right, and front/rear vibrations of the tub (200).

10. The drum type washing machine as claimed in claim 9, wherein at least one of the first to third springs (510, 520, 530) is connected to an upper surface of the tub (200).

11. The drum type washing machine as claimed in claim 9, wherein the third damper (430) is arranged at the mid-point in a longitudinal direction of the tub (200).

12. The drum type washing machine as claimed in claim 9, wherein the first (410) or second (420) damper has half the damping capability of the third damper (430).

13. The drum type washing machine as claimed in claim 9, wherein the first spring (510) is arranged at the mid-point in a longitudinal direction of the tub (200), and
the second (520) and third (530) springs are arranged adjacent a front part and a rear part in a longitudinal direction of the tub (200).

14. The drum type washing machine as claimed in claim 9, wherein the first spring (510) is positioned on a side of the tub (200) at which the drum (300) rotates downwardly, and
the second (520) and third (530) springs are positioned on a side of the tub (200) at which the drum (300) rotates upwardly.

15. The drum type washing machine as claimed in claim 9 or 14, wherein the second (520) or third (530) spring has half the damping capability of the first spring (510).

16. The drum type washing machine as claimed in claim 1 wherein the first (410) and second (420) dampers are connected between one side of a circumferential surface of the tub (200) and the cabinet (100) respectively, for attenuating up/down, left/right, and front/rear vibrations of the tub (200);
the third damper (430) is connected between the other side of the circumferential surface of the tub (200) and the cabinet (100), for attenuating up/down, and left/right vibrations of the tub (200); and
the at least one spring (510, 520, 530) is connected between the circumferential surface of the tub (200) and the cabinet (100), for attenuating up/down, left/right, and front/rear vibrations of the tub (200).

17. The drum type washing machine as claimed in claim 16, wherein the at least one spring (510, 520, 530) includes:
a first spring (510) connected to an upper surface of the tub (200) on the same side as the first (410) and second (420) dampers for attenuating up/down, and left/right vibrations of the tub (200), and
second (520) and third (530) springs connected to the upper surface of the tub (200) on a side the same with the third damper (430) for attenuating up/down, left/right, and front/rear vibrations of the tub (200).

## Patentansprüche

1. Trommelwaschmaschine, welche enthält:
ein Gehäuse (100), welches eine Öffnung (110) in einer vorderen Fläche aufweist;
einen Bottich (200) innerhalb des Gehäuses (100), welcher eine Trommel (300) aufweist, die im Inneren desselben drehbar angebracht ist;
einen ersten (410) und zweiten (420) Dämpfer, welche jeweils zwischen einer Seite einer unteren Umfangsfläche des Bottichs (200) und dem Gehäuse (100) angeschlossen sind;
einen einzelnen dritten Dämpfer (430), welcher zwischen der anderen Seite der unteren Umfangsfläche des Bottichs (200) und dem Gehäuse (100) angeschlossen ist; und
wenigstens eine Feder (510, 520, 530), welche zwischen der Umfangsfläche des Bottichs (200) und dem Gehäuse (100) angeschlossen ist,
wobei der erste (410) und der zweite (420) Dämpfer benachbart einem vorderen Abschnitt bzw. einem hinteren Abschnitt in einer Längsrichtung des Bottichs (200) angeordnet sind, und wobei der dritte Dämpfer (430) an dem Punkt in der Mitte zwischen dem ersten (410) und dem zweiten (420) Dämpfer an der anderen Seite der unteren Umfangsfläche des Bottichs (200) angeordnet ist,
wobei der erste (410) und der zweite (420) Dämpfer an einer Seite des Bottichs (200) positioniert sind, an welcher die Trommel (300) sich nach unten dreht, und der dritte Dämpfer (430) an einer Seite des Bottichs (200) positioniert ist, an welcher die Trommel (300) sich nach oben dreht,
wobei der erste (410) oder der zweite (420) Dämpfer im Wesentlichen die Hälfte der Dämpfungsleistung des dritten Dämpfers (430) aufweisen, und **dadurch gekennzeichnet, dass** die wenigstens eine Feder (510, 520, 530) umfasst:
eine erste Feder (510), welche mit einer oberen Fläche des Bottichs (200) an derselben Seite wie der erste (410) und der zweite (420) Dämpfer verbunden ist, und
eine zweite (520) und eine dritte (530) Feder, welche mit der oberen Fläche des Bottichs (200) an derselben Seite wie der dritte Dämpfer (430) verbunden sind.

2. Trommelwaschmaschine nach Anspruch 1, wobei der dritte Dämpfer (430) an dem Punkt in der Mitte in einer Längsrichtung des Bottichs (200) angeordnet ist.

3. Trommelwaschmaschine nach Anspruch 1, wobei die erste Feder (510) an dem Punkt in der Mitte in einer Längsrichtung des Bottichs (200) positioniert ist.

4. Trommelwaschmaschine nach Anspruch 1, 2 oder 3, wobei die zweite (520) und die dritte (530) Feder benachbart einem vorderen Abschnitt bzw. einem hinteren Abschnitt in der Längsrichtung des Bottichs (200) angeordnet sind.

5. Trommelwaschmaschine nach Anspruch 1, 2 oder 3, wobei die erste Feder (510) an dem Punkt in der Mitte zwischen der zweiten (520) und der dritten (530) Feder an der anderen Seite der oberen Fläche des Bottichs (200) angeordnet ist.

6. Trommelwaschmaschine nach Anspruch 1 oder 2, wobei die erste Feder (510) an einer Seite des Bottichs (200) positioniert ist, an welcher die Trommel (300) sich nach unten dreht.

7. Trommelwaschmaschine nach Anspruch 1, 2 oder 6, wobei die zweite (520) und die dritte (530) Feder an einer Seite des Bottichs (200) positioniert sind, an welcher die Trommel (300) sich nach oben dreht.

8. Trommelwaschmaschine nach Anspruch 1, 2 oder 6, wobei die zweite (520) oder die dritte (530) Feder die Hälfte der Dämpfungsleistung der ersten Feder (510) aufweist.

9. Trommelwaschmaschine nach Anspruch 1, wobei der erste (410) und der zweite (420) Dämpfer jeweils zwischen einer Seite einer Umfangsfläche des Bottichs (200) und dem Gehäuse (100) zum Dämpfen von Aufwärts-/Abwärts-, Links-/Rechts- und Vorwärts-/Rückwärts-Schwingungen des Bottichs (200) angeschlossen sind;
wobei der dritte Dämpfer (430) zwischen der anderen Seite der Umfangsfläche des Bottichs (200) und dem Gehäuse (100) zum Dämpfen von Aufwärts-/Abwärts- und Links-/Rechts-Schwingungen des Bottichs (200) angeschlossen ist; und wobei die wenigstens eine Feder (510, 520, 530) umfasst:
eine erste Feder (510), welche zwischen derselben Seite einer Umfangsfläche des Bottichs (200) wie der erste (410) und der zweite (420) Dämpfer und dem Gehäuse (100) zum Dämpfen von Aufwärts-/Abwärts- und Links-/Rechts-Schwingungen des Bottichs (200) angeschlossen ist; und
eine zweite (520) und eine dritte (530) Feder, welche jeweils zwischen derselben Seite einer Umfangsfläche des Bottichs (200) wie der dritte (430) Dämpfer und dem Gehäuse (100) zum Dämpfen von Aufwärts-/Abwärts-, Links-/Rechts- und Vorwärts-/Rückwärts-Schwingungen des Bottichs (200) angeschlossen sind.

10. Trommelwaschmaschine nach Anspruch 9, wobei wenigstens eine von der ersten bis dritten Feder (510, 520, 530) mit einer oberen Fläche des Bottichs (200) verbunden ist.

11. Trommelwaschmaschine nach Anspruch 9, wobei der dritte Dämpfer (430) an dem Punkt in der Mitte in einer Längsrichtung des Bottichs (200) angeordnet ist.

12. Trommelwaschmaschine nach Anspruch 9, wobei der erste (410) oder der zweite (420) Dämpfer die Hälfte der Dämpfungsleistung des dritten Dämpfers (430) aufweist.

13. Trommelwaschmaschine nach Anspruch 9, wobei die erste Feder (510) an dem Punkt in der Mitte in einer Längsrichtung des Bottichs (200) angeordnet ist, und
wobei die zweite (520) und die dritte (530) Feder benachbart einem vorderen und einem hinteren Abschnitt in einer Längsrichtung des Bottichs (200) angeordnet sind.

14. Trommelwaschmaschine nach Anspruch 9, wobei die erste Feder (510) an einer Seite des Bottichs (200) positioniert ist, an welcher die Trommel (300) sich nach unten dreht, und
wobei die zweite (520) und die dritte (530) Feder an einer Seite des Bottichs (200) positioniert sind, an welcher die Trommel (300) sich nach oben dreht.

15. Trommelwaschmaschine nach Anspruch 9 oder 14, wobei die zweite (520) oder die dritte (530) Feder die Hälfte der Dämpfungsleistung der ersten Feder (510) aufweisen.

16. Trommelwaschmaschine nach Anspruch 1, wobei der erste (410) und der zweite (420) Dämpfer jeweils zwischen einer Seite einer Umfangsfläche des Bottichs (200) und dem Gehäuse (100) zum Dämpfen von Aufwärts-/Abwärts-, Links-/Rechts- und Vorwärts-/Rückwärts-Schwingungen des Bottichs (200) angeschlossen sind;
wobei der dritte Dämpfer (430) zwischen der anderen Seite der Umfangsfläche des Bottichs (200) und dem Gehäuse (100) zum Dämpfen von Aufwärts-/Abwärts- und Links-/Rechts-Schwingungen des Bottichs (200) angeschlossen ist; und
wobei die wenigstens eine Feder (510, 520, 530) zwischen der Umfangsfläche des Bottichs (200) und dem Gehäuse (100) zum Dämpfen von Aufwärts-/Abwärts-, Links-/Rechts-, und Vorwärts-/Rückwärts-Schwingungen des Gehäuses (200) angeschlossen ist.

17. Trommelwaschmaschine nach Anspruch 16, wobei die wenigstens eine Feder (510, 520, 530) umfasst:
eine erste Feder (510), welche mit einer oberen Fläche des Bottichs (200) an derselben Seite verbunden ist wie der erste (410) und der zweite (420) Dämpfer, zum Dämpfen von Aufwärts-/Abwärts- und Links-/Rechts-Schwingungen des Bottichs (200), und
eine zweite (520) und eine dritte (530) Feder, welche mit der oberen Fläche des Bottichs (200) an derselben Seite wie der dritte Dämpfer (430) verbunden sind, zum Dämpfen von Aufwärts-/Abwärts-, Links-/Rechts-, und Vorwärts-/Rückwärts--Schwingungen des Bottichs (200).

## Revendications

1. Machine à laver à tambour comprenant :
une armoire (100) ayant une ouverture (110) dans une surface avant ;
une cuve (200) à l'intérieur de l'armoire (100) ayant un tambour (300) monté de manière rotative à l'intérieur de celle-ci ;
des premier (410) et deuxième (420) amortisseurs reliés entre un côté d'une surface circonférentielle inférieure de la cuve (200) et l'armoire (100), respectivement ;
un troisième amortisseur (430) relié entre l'autre côté de la surface circonférentielle inférieure de la cuve (200) et l'armoire (100) ; et
au moins un ressort (510, 520, 530) relié entre la surface circonférentielle de la cuve (200) et l'armoire (100),
les premier (410) et deuxième (420) amortisseurs étant disposés de manière adjacente à une partie avant et une partie arrière dans une direction longitudinale de la cuve (200), respectivement, et le troisième amortisseur (430) est disposé au milieu entre les premier (410) et deuxième (420) amortisseurs de l'autre côté de la surface circonférentielle inférieure de la cuve (200),
les premier (410) et deuxième (420) amortisseurs étant positionnés d'un côté de la cuve (200) au niveau duquel le tambour (300) tourne vers le bas et le troisième amortisseur (430) est positionné d'un côté de la cuve (200) au niveau duquel le tambour (300) tourne vers le haut,
le premier (410) ou le deuxième (420) amortisseur ayant essentiellement une capacité d'amortissement égale à la moitié de celle du troisième amortisseur (430) et **caractérisée en ce que**
l'au moins un ressort (510, 520, 530) comprend :
un premier ressort (510) relié à une surface supérieure de la cuve (200) du même côté que les premier (410) et deuxième (420) amortisseurs, et
des deuxième (520) et troisième (530) ressorts reliés à la surface supérieure de la cuve (200) du même côté que le troisième amortisseur (430).

2. Machine à laver à tambour selon la revendication 1, dans laquelle le troisième amortisseur (430) est disposé au milieu dans une direction longitudinale de la cuve (200).

3. Machine à laver à tambour selon la revendication 1, dans laquelle le premier ressort (510) est positionné au milieu dans une direction longitudinale de la cuve (200).

4. Machine à laver à tambour selon la revendication 1, 2 ou 3, dans laquelle les deuxième (520) et troisième (530) ressorts sont disposés de manière adjacente à une partie avant et une partie arrière dans la direction longitudinale de la cuve (200), respectivement.

5. Machine à laver à tambour selon la revendication 1, 2 ou 3, dans laquelle le premier ressort (510) est disposé au milieu entre les deuxième (520) et troisième (530) ressorts de l'autre côté de la surface supérieure de la cuve (200).

6. Machine à laver à tambour selon la revendication 1 ou 2, dans laquelle le premier ressort (510) est positionné d'un côté de la cuve (200) au niveau duquel le tambour (300) tourne vers le bas.

7. Machine à laver à tambour selon la revendication 1, 2 ou 6, dans laquelle les deuxième (520) et troisième (530) ressorts sont positionnés d'un côté de la cuve (200) au niveau duquel le tambour (300) tourne vers le haut.

8. Machine à laver à tambour selon la revendication 1, 2 ou 6, dans laquelle le deuxième (520) ou le troisième (530) ressort a une capacité d'amortissement égale à la moitié de celle du premier ressort (510).

9. Machine à laver à tambour selon la revendication 1, dans laquelle les premier (410) et deuxième (420) amortisseurs sont reliés entre un côté d'une surface circonférentielle de la cuve (200) et l'armoire (100) respectivement, pour atténuer les vibrations haut / bas, gauche / droite et avant / arrière de la cuve (200) ;
le troisième amortisseur (430) est relié entre l'autre côté de la surface circonférentielle de la cuve (200) et l'armoire (100) pour atténuer les vibrations haut / bas et gauche / droite de la cuve (200) ; et l'au moins un ressort (510, 520, 530) comprend :
un premier ressort (510) relié entre le même côté d'une surface circonférentielle de la cuve (200) que les premier (410) et deuxième (420) amortisseurs et l'armoire (100) pour atténuer les vibrations haut / bas et gauche / droite de la cuve (200) ; et
des deuxième (520) et troisième (530) ressorts reliés entre le même côté d'une surface circonférentielle de la cuve (200) que le troisième amortisseur (430) et l'armoire (100) respectivement, pour atténuer les vibrations haut / bas, gauche / droite et avant / arrière de la cuve (200).

10. Machine à laver à tambour selon la revendication 9, dans laquelle au moins l'un des premier à troisième ressorts (510, 520, 530) est relié à une surface supérieure de la cuve (200).

11. Machine à laver à tambour selon la revendication 9, dans laquelle le troisième amortisseur (430) est disposé au milieu dans une direction longitudinale de la cuve (200).

12. Machine à laver à tambour selon la revendication 9, dans laquelle le premier (410) ou le deuxième (420) amortisseur a une capacité d'amortissement égale à la moitié de celle du troisième amortisseur (430).

13. Machine à laver à tambour selon la revendication 9, dans laquelle le premier ressort (510) est disposé au milieu dans une direction longitudinale de la cuve (200), et
les deuxième (520) et troisième (530) ressorts sont disposés de manière adjacente à une partie avant et une partie arrière dans une direction longitudinale de la cuve (200).

14. Machine à laver à tambour selon la revendication 9, dans laquelle le premier ressort (510) est positionné d'un côté de la cuve (200) au niveau duquel le tambour (300) tourne vers le bas, et
les deuxième (520) et troisième (530) ressorts sont positionnés d'un côté de la cuve (200) au niveau duquel le tambour (300) tourne vers le haut.

15. Machine à laver à tambour selon la revendication 9 ou 14, dans laquelle le deuxième (520) ou le troisième (530) ressort a une capacité d'amortissement égale à la moitié de celle du premier ressort (510).

16. Machine à laver à tambour selon la revendication 1 dans laquelle les premier (410) et deuxième (420) amortisseurs sont reliés entre un côté d'une surface circonférentielle de la cuve (200) et l'armoire (100) respectivement, pour atténuer les vibrations haut / bas, gauche / droite et avant / arrière de la cuve (200) ;
le troisième amortisseur (430) est relié entre l'autre côté de la surface circonférentielle de la cuve (200) et l'armoire (100) pour atténuer les vibrations haut / bas et gauche / droite de la cuve (200) ; et
l'au moins un ressort (510, 520, 530) est relié entre la surface circonférentielle de la cuve (200) et l'armoire (100) pour atténuer les vibrations haut / bas, gauche / droite et avant / arrière de la cuve (200).

17. Machine à laver à tambour selon la revendication 16, dans laquelle l'au moins un ressort (510, 520, 530) comprend :
un premier ressort (510) relié à une surface supérieure de la cuve (200) du même côté que les premier (410) et deuxième (420) amortisseurs pour atténuer les vibrations haut / bas et gauche / droite de la cuve (200), et
des deuxième (520) et troisième (530) ressorts reliés à la surface supérieure de la cuve (200) du même côté que le troisième amortisseur (430) pour atténuer les vibrations haut / bas, gauche / droite et avant / arrière de la cuve (200).
